# EUROPÄISCHE PATENTSCHRIFT

(11) **EP 0 408 847 B1**
(45) Veröffentlichungstag und Bekanntmachung des Hinweises auf die Patenterteilung: **19.01.1994**
(21) Anmeldenummer: 90108884.9
(22) Anmeldetag: 11.05.1990
(51) Int. Cl.: B62D 1/18

(54) **Vorrichtung zum Längs- und Höhenverstellen der Lenksäule eines Kraftfahrzeuges**
Device for adjusting the reach and height of the steering column of a motor vehicle
Dispositif pour ajuster en longueur et en hauteur la colonne de direction d'une voiture

(30) Priorität: 24.06.1989 DE 3920783
(43) Veröffentlichungstag der Anmeldung: 23.01.1991
(73) Patentinhaber: Bayerische Motoren Werke Aktiengesellschaft, 80788 München (DE)
(72) Erfinder: Ginster, Michael, D-8048 Haimhausen (DE); König, Roland, D-8025 Unterhaching (DE); Aksit, Ilhami, D-8000 München 40 (DE)

(56) Entgegenhaltungen:
- DE-A- 3 205 416
- DE-A- 3 300 268
- DE-B- 1 780 061
- DE-C- 2 054 116
- FR-A- 2 360 454

## Beschreibung

Die Erfindung bezieht sich auf eine Vorrichtung der im Oberbegriff des Patentanspruchs 1 genannten und aus der FR-A-2 360 454 hervorgehenden Art.

Bei der in dieser Druckschrift offenbarten Vorrichtung sind die in den Halteteilen der Lenksäule und in den fahrzeugaufbaufesten Tragwänden ausgebildeten Führungsschlitze von einem Klemmbolzen durchsetzt, der zwischen den beiden Halteteilen von einer stirnseitig an dieser anliegenden Distanzhülse umgeben ist und der mit seinen beiden Endabschnitten über die fahrzeugaufbaufesten Tragwände hinausragt. Dabei ist auf einen Endabschnitt des Klemmbolzens eine über mehrere Zwischenscheiben an der zugewandten Tragwand angreifende Mutter aufgeschraubt, während am gegenüberliegenden Endabschnitt des Klemmbolzens eine Exzenternocken angelenkt ist. Dieser ist durch einen Schwenknebel verschwenkbar, wobei in dessen Spannlage die Tragwände an ihrem freien Endbereich über den Exzenternocken gegen die Halteteile gepreßt werden, so daß die Lenksäule in der jeweiligen Schwenklage schwenkfest gehalten ist. Nachdem jedoch der Schwenknebel außerhalb einer Tragwand am Klemmbolzen angelenkt ist und dabei in Fahrzeugquerrichtung zwischen der Löselage und der Spannlage verschwenkt wird, wird für seine Betätigung verhältnismäßig viel Platz benötigt. Darüber hinaus ist der Schwenkhebel auch unbequem zu betätigen.

Ferner geht aus der DE-C-20 54 116 eine lediglich längsverstellbare Lenkvorrichtung hervor, deren Lenkrohr im Bereich des Lenkrades durch ein Klemmteil festklemmbar ist (Figur 4). Dieses weist zwei Schrauben mit einem Rechts- und Linksgewinde auf, welche mit einer einen Schwenkhebel tragenden Gewindehülse versehen sind. Dabei ist jedoch die Schraube mit dem Rechtsgewinde fest in das Klemmteil eingeschraubt, während die ein Linksgewinde aufweisende Schraube mit Radialspiel in eine Durchgangsbohrung des Klemmteil eingesetzt ist. Damit das Klemmteil über die Gewindehülse in einer bestimmten Schwenklage des Schwenkhebels festgeklemmt werden kann, ist am Schraubenkopf der Linksgewinde-Schraube eine aus einem Blechteil bestehende Schraubensicherung vorgesehen, die ihrerseits am Klemmteil festgeschraubt ist. Abgesehen davon, daß das Lenkrohr mit der bekannten Klemmeinrichtung nur bei einer Längsverstellung festgeklemmt werden kann, ist zum Festlegen der Linksgewinde-Schraube eine teuere und unschön wirkende Schraubensicherung erforderlich, die zeitaufwendig eingestellt werden muß.

Aufgabe der Erfindung ist es daher, bei einer Vorrichtung der im Oberbegriff des Patentanspruchs 1 genannten Art das Klemmelement derart auszubilden, daß es bei platzsparender Anordnung in einfacher Weise betätigt werden kann und dabei stets in drehfester Verbindung mit den Halteteilen steht.

Zur Lösung der Aufgabe sind die im kennzeichnenden Teil des Patentanspruchs 1 dargelegten Merkmale vorgesehen.

Nachdem das Klemmelement erfindungsgemäß aus zwei Schraubteilen besteht, können deren einander zugewandte, ein Rechts- und Linksgewinde aufweisende Gewindeendabschnitte mit einer verdrehbaren Gewindehülse versehen sicherheitsmäßiger Hinsicht optimal angeordnet und auch griffgünstig erreichbar ist. Darüber hinaus hat diese Anordnung des Schwenkhebels auch den Vorteil, daß die Lenkung sowohl für einen Rechtslenker als auch für einen Linkslenker verwendet und dabei verdeckt und optisch ansprechend angeordnet werden kann. Durch die Ausbildung eines Vierkants an den beiden Schraubteilen greifen diese stets drehfest, jedoch längsverschiebbar in die Führungsschlitze der Halteteile ein, so daß die Tragwände durch bloßes Verdrehen der Gewindehülse über den Schwenkhebel an die Halteteile des Lenkrohrs gepreßt werden. Darüber hinaus ist durch eine an einem Schraubteil außenliegend angeordnete Mutter in einfacher Weise die Einstellbarkeit der beiden Schraubteile gewährleistet, so daß der Schwenkhebel bei vorhandenen Fertigungstoleranzen und nach einer Abnützung der Gewindeteile in einfacher Weise in die gewünschte Schwenklage eingestellt werden kann.

Ausgestaltungen der Erfindung sind in den Patentansprüchen 2 und 3 gekennzeichnet.

Ein Ausführungsbeispiel der Erfindung ist in der Zeichnung dargestellt und wird im folgenden erläutert. Es zeigt:
- Fig. 1: die erfindungsgemäße Befestigung des Lenkrohrs an zwei fahrzeugaufbaufesten Tragwänden,
- Fig. 2: einen Schnitt längs der Linie II-II in Fig. 1 in größerer Darstellung.

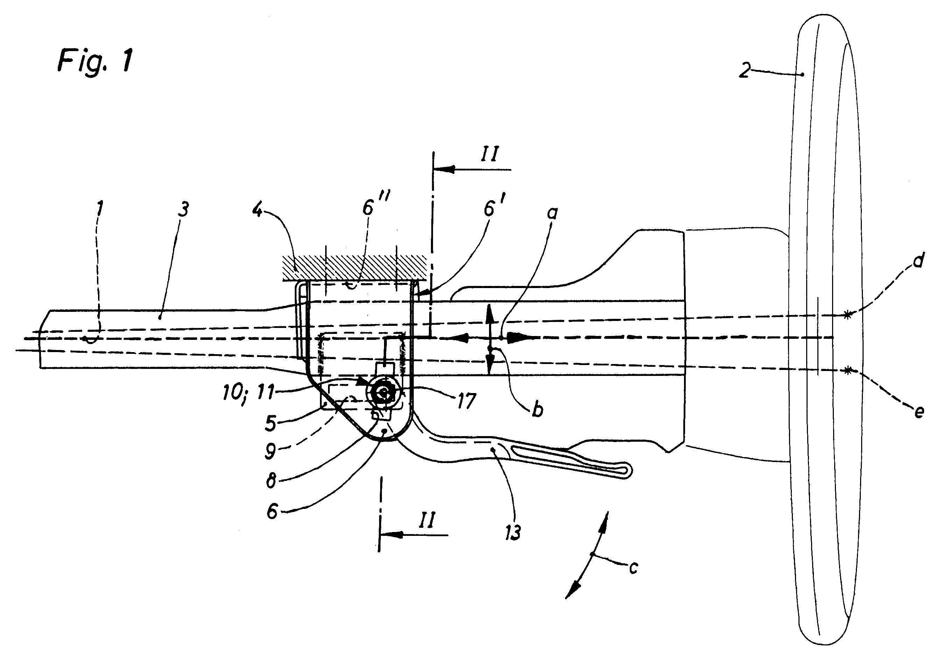

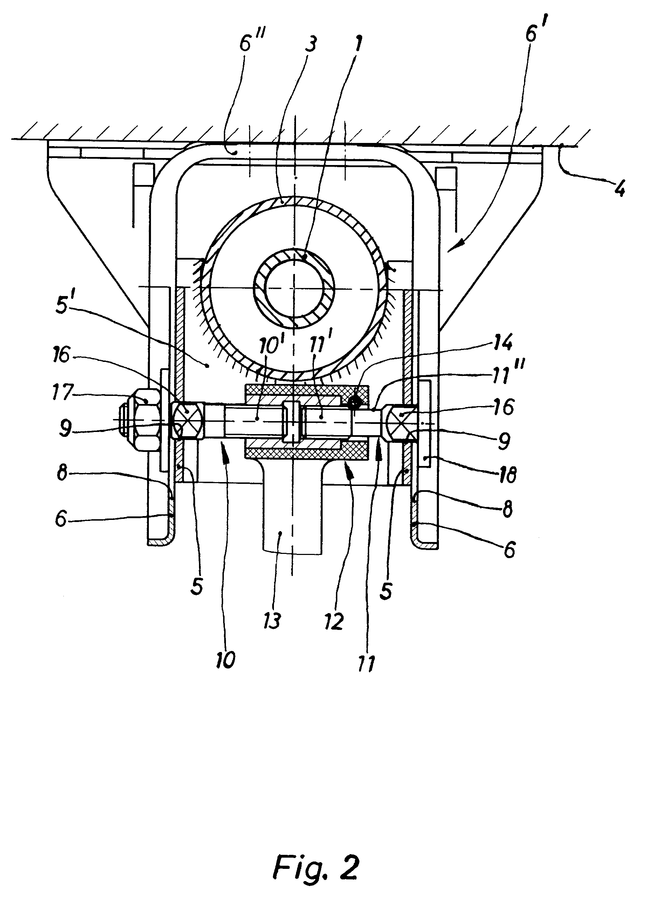

In den Fig. 1 und 2 ist eine Vorrichtung zum Längsverstellen (Richtungen des Doppelpfeils a) und Höhenverstellen (Richtungen des Doppelpfeils b) der mit gestrichelten Linien dargestellten Lenksäule 1 eines Personenkraftwagens veranschaulicht. Dabei werden die Lenkbewegungen von einem Lenkrad 2 über die Lenksäule 1 in ein nicht dargestelltes Lenkgetriebe eingeleitet, mit dem diese in längsverstellbarer Verbindung steht. Ferner ist die Lenksäule 1 in einem Lenkrohr 3 drehbar gelagert, an dem zwei gegenüberliegende sowie parallel zueinander verlaufende, plattenförmige Halteteile 5 über ein Zwischenteil 5′ durch Schweißen o.dgl. befestigt sind. An den Außenseiten der Halteteile 5 liegt jeweils eine Tragwand 6 an, welche die Schenkel eines U-förmigen Bügels 6′ bilden, dessen Steg 6˝ an einem Armaturenbrett 4 befestigt ist.

Wie in den Fig. 1 und 2 ersichtlich, ist in den beiden Tragwänden 6 jeweils ein etwa lotrecht verlaufender Führungsschlitz 8 ausgebildet, wobei ferner etwa rechtwinklig zu diesen verlaufende, sich mit diesen kreuzende Führungsschlitze 9 in jeweils einem Halteteil 5 angeordnet sind. Die Führungsschlitze 8 und 9 sind jeweils von einem Schraubteil 10 und 11 durchsetzt, deren Gewindeendabschnitte 10′ und 11′ einander zugewandt sind (Fig. 2). Dabei hat der Gewindeendabschnitt 10′ ein Rechtsgewinde, während der Gewindeendabschnitt 11′ mit einem Linksgewinde versehen ist. Ferner tragen die beiden Gewindeendabschnitte 10′ und 11′ eine Gewindehülse 12, die mit entsprechenden, einander zugewandten Rechts- und Linksinnengewinden versehen ist. Darüber hinaus weist die Gewindehülse 12 einen radial abstehenden Schwenkhebel 13 auf, über den sie um ihre Rotationsachse verdrehbar ist. Durch einen schließlich in die Gewindehülse 12 eingesetzten Querstift 14, der in eine Umfangsnut 11" des Schraubteils 11 eingreift, wird dessen unbefugtes Herausdrehen erschwert. Dabei entspricht der Durchmesser der Umfangsnut 11" etwa dem Kerndurchmesser des Gewindeendabschnitts 11', nahe dessen rückwärtiger Ringschulter sich der Querstift 14 befindet.

Die beiden Schraubteile 10 und 11 sind im Bereich der Halteteile 5 jeweils mit einem in deren Führungsschlitz 9 drehfest eingreifenden Vierkant 16 versehen; die Halteteile 5 - und damit das Lenkrohr 3 - sind jedoch über die Führungsschlitze 9 in Bezug zu den auch die Führungsschlitze 8 der Tragwände 6 durchsetzenden Schraubteilen 10 und 11 längsverschiebbar. Ferner ist auf den außenliegenden Gewindeendabschnitt des Schraubteils 10 eine Mutter 17 aufgeschraubt, die unter Zwischenlage einer Beilagscheibe an der Tragwand 6 angreift. Über die Mutter 17 sind die beiden Schraubteile 10 und 11 sowohl bei Fahrzeug-Neuanfertigung als auch nach Abnutzung der Gewindeendabschnitte 10' und 11' und/oder der Innengewinde der Gewindehülse 12 derart einstellbar, daß die beiden Tragwände 6 etwa in der in Fig. 1 dargestellten Schwenklage des Schwenkhebels 13 (Feststellage) an die beiden Halteteile 5 - wie im folgenden erläutert wird - gepreßt werden. Schließlich ist das Schraubteil 11 mit einem an der Tragwand 6 anliegenden Schraubenkopf 18 versehen.

In der in Fig. 1 dargestellten Lage des Lenkrohrs 3 und damit des Lenkrads 2 befindet sich dieses in seiner üblichen Gebrauchslage, wobei der Höhenmittelbereich der in den Tragwänden 6 angeordneten Führungsschlitze 8 im Bereich der Führungsschlitze 9 der Halteteile 5 liegt. Zum Längs- und/oder Höhenverstellen der Lenksäule 1 und damit des Lenkrads 2 wird der Schwenkhebel 13 in die abwärtsgerichtete Richtung des Doppelpfeils c verlagert und damit die zwischen den Tragwänden 6 und den Halteteilen 5 bestehende Klemmverbindung über die Schraubteile 10 und 11 und die Gewindehülse 12 gelöst, so daß das Lenkrad 2 in den Richtungen des Doppelpfeils a und/oder des Doppelpfeils b in die gewünschte Lage gebracht werden kann. Bei Höhenverlagerung der Lenksäule 1 gleiten die Schraubteile 10 und 11 in den Richtungen des Doppelpfeils b in den Führungsschlitzen 8 der Tragwände 6, während beim Längsverstellen der Lenksäule 1 die in den Halteteilen 5 angeordneten Führungsschlitze 9 über den Vierkant 16 der Schraubteile 10 und 11 gleiten. Hat das Lenkrad 2 die gewünschte Lage erreicht, so wird der Schwenkhebel 13 in die nach oben gerichtete Richtung des Doppelpfeils c verschwenkt und dadurch die Tragwände 6 über die Schraubteile 10 und 11 und die Gewindehülse 12 gegen die Halteteile 5 des Lenkrohrs 3 gepreßt, wodurch schließlich die Lenksäule 1 im Bereich des Armaturenbretts 4 schwenkfest festgelegt ist. Die in den Tragwänden 6 angeordneten Führungsschlitze 8 erstrecken sich in einem derart großen Abstand bogenförmig um das am unteren Ende der Lenksäule 1 vorgesehene Gelenk, daß sie nahezu lotrecht verlaufen. Die von der Mittellage abweichenden, nach oben und unten verlagerten Schwenklagen der Lenksäule 1 sind in Fig. 1 mit gestrichelten Linien dargestellt und die Endpunkte mit d und e bezeichnet.

## Patentansprüche

1. Vorrichtung zum Längs- und Höhenverstellen der Lenksäule (1) eines Kraftfahrzeugs, im wesentlichen bestehend aus zwei fahrzeugaufbaufesten Tragwänden (6) und einem zwischen diesen liegenden, die Lenksäule (1) aufnehmenden Lenkrohr (3), das mit zwei gegenüberliegenden, an jeweils einer Tragwand (6) anliegenden Halteteilen (5) versehen ist, wobei einerseits an diesen Halteteilen (5) und andererseits an den Tragwänden (6) etwa rechtwinklig zueinander verlaufende Führungsschlitze (9, 8) ausgebildet sind, die von einem die Tragwände (6) an die Halteteile (5) anpressenden Klemmelement (Schraubteile 10 und 11) durchsetzt sind, dadurch gekennzeichnet, daß
- das Klemmelement aus zwei Schraubteilen (10 und 11) besteht, deren einander zugewandte, mit einem Rechts- und Linksgewinde versehene Gewindeendabschnitte (10' und 11') eine verdrehbare Gewindehülse (12) tragen, wobei
- die beiden Schraubteile (10 und 11) über jeweils ein Vierkant (16) im Führungsschlitz (9) der Halteteile (5) drehfest angeordnet sind.

2. Vorrichtung nach Anspruch 1, dadurch gekennzeichnet, daß eines der Schraubteile (Schraubteil 10) durch eine an der angrenzenden Tragwand (6) angreifende Mutter (17) einstellbar ist, während das andere Schraubteil (Schraubteill 11) über einen Schraubenkopf (18) an der zugewandten Tragwand (6) anliegt.

3. Vorrichtung nach Anspruch 1, gekennzeichnet durch einen in die Gewindehülse (12) eingesetzten Querstift (14), der in eine Umfangsnut (11") an einem der Schraubteile (Schraubteil 11) eingreift, wobei der Durchmesser der Umfangsnut (11") etwa den Kerndurchmesser des Schraubteils (Schraubteil 11) entspricht.

## Claims

1. A device for adjusting the reach and height of the steering column (1) of a motor vehicle, substantially comprising two bearing walls (6) secured to the vehicle body and a steering-column jacket or sleeve (3) disposed between the walls and receiving the steering column (1), the jacket or sleeve (3) being provided with two opposite retaining parts (5), one adjacent each bearing wall (6), and guide slots (9, 8) extending approximately at right angles to one another being formed on the retaining parts (5) and on the bearing walls (6) respectively, and a clamping element (screw parts 10 and 11) extending through the slots and pressing the bearing walls (6) against the retaining parts (5), characterised in that
- the clamping element comprises two screw parts (10 and 11) having facing right-handed and left-handed threaded portions (10' and 11') bearing a rotatable threaded sleeve (12), and
- the two screw parts (10 and 11) each have a square end (16) non-rotatably disposed in the guide slot (9) in the retaining parts (5).

2. A device according to claim 1, characterised in that one of the screw parts (screw part 10) is adjustable by a nut (17) engaging the adjacent bearing wall (6) while the other screw part (screw part 11) has a screw head (18) abutting the facing bearing wall (6).

3. A device according to claim 1, characterised by a transverse pin (14) which is inserted into the threaded sleeve (12) and engages in a peripheral groove (11'') on one of the screw parts (screw part 11), the diameter of the peripheral groove (11'') being approximately equal to the root diameter of the screw part (screw part 11).

## Revendications

1. Dispositif d'ajustage en longueur et en hauteur de la colonne de direction d'un véhicule automobile, composé essentiellement de deux parois support (6) et d'un tube de direction (3) se situant entre celles-ci et recevant la colonne de direction (3), tube qui est muni de deux pièces de support 5 opposées, s'appuyant respectivement sur les parois support (6), dispositif dans lequel sont réalisées des rainures de guidage (9, 8) se développant d'une part sur ces pièces support (5) et d'autre part sur ces parois support (6) à peu près à angle droit les unes par rapport aux autres, rainures qui sont traversées par un élément de blocage (parties de vis 10 et 11) comprimant les parois support (6) contre les pièces support (5), caractérisé en ce que :
- l'élément de blocage se compose de deux parties de vis (10 et 11) dont les tronçons filetés (10' et 11') tournés l'un vers l'autre, munis d'un filet à droite et d'un filet à gauche, portent une douille filetée (12), tandis que,
- les deux parties de vis (10 et 11) sont disposées solidaires en rotation par l'intermédiaire respectivement d'un quatre pans (16), dans la rainure de guidage (9) des pièces support (5).

2. Dispositif selon la revendication 1, caractérisé en ce qu'une des parties de vis (partie de vis 10) peut être ajustée par un écrou (17) agissant sur la paroi support (6) adjacente, tandis que l'autre partie de vis (partie de vis 11) adhère à une tête de vis (18) contre la paroi support (6) associée.

3. Dispositif selon la revendication 1, caractérisé par une cheville transversale (14) insérée dans la douille filetée (12), qui s'insère dans une rainure périphérique (11") sur une des parties de vis (partie de vis 11), le diamètre de la rainure périphérique (11") correspondant sensiblement au diamètre de noyau de la partie de vis (partie de vis 11).
